# EUROPÄISCHE PATENTSCHRIFT

(11) **EP 3 705 260 B1**
(45) Veröffentlichungstag und Bekanntmachung des Hinweises auf die Patenterteilung: **01.09.2021**
(21) Anmeldenummer: 20151839.6
(22) Anmeldetag: 14.01.2020
(51) Int. Cl.: B29C 49/48, B29C 49/58, B29C 49/06, B29L 31/00

(54) **BLASWERKZEUG FÜR EINE BLASFORMMASCHINE**
BLOWING TOOL FOR A BLOW MOULDING MACHINE
OUTIL DE SOUFFLAGE POUR UNE MACHINE DE MOULAGE PAR SOUFFLAGE

(30) Priorität: 05.03.2019 DE 102019105538
(43) Veröffentlichungstag der Anmeldung: 09.09.2020
(73) Patentinhaber: Kautex Maschinenbau GmbH, 53229 Bonn (DE)
(72) Erfinder: Blömer, Michael, 53179 Bonn (DE); Kurek, Martin, 53844 Troisdorf (DE)
(74) Vertreter: ERNICKE Patent- und Rechtsanwälte PartmbB

(56) Entgegenhaltungen:
- EP-A1- 0 361 141
- EP-A1- 3 059 069
- US-A1- 2003 132 186

## Beschreibung

Die Erfindung betrifft ein Blaswerkzeug für eine Blasformmaschine zur Herstellung von Hohlkörpern mit einem Schräghals, umfassend eine Handhabungseinrichtung zum zeitweiligen Einbringen mindestens eines Blasdorns in eine Blasform sowie zum Kalibrieren des Schräghalses. Die Dokumente EP3059069A1, EP0361141A1 und US2003/132186A1 beschreiben Blaswerkzeugen geeignet für eine Blasformmaschine zur Herstellung von Hohlkörpern.

Hohlkörper mit einem Schräghals sind beispielsweise Schräghals-Flaschen zur Aufnahme von flüssigem Füllgut. Im Bereich des Schräghalses befindet sich die Mündung des Hohlkörpers und ggf. der Verschluss.

In der Blasformtechnik versteht man unter dem Begriff "Kalibrierte Mündung" eine Mündung, die während des Umformens durch das Zusammenwirken von Teilen des Blaswerkzeuges, wie beispielsweise dem Halseinsatz oder Abschnitten der Blasform und dem Blasdorn hergestellt werden.

Aus dem Stand der Technik ist das Kalibrieren durch eine Werkzeugschließbewegung und das Kalibrieren durch eine Blasdornbewegung bekannt. Ferner ist ein Kalibrieren nach dem Schleppdornverfahren bekannt, bei dem der Blasdorn bereits in den Vorformling hineinragt, wenn das Werkzeug schließt.

Ein bekanntes Blaswerkzeug für eine Blasformmaschine zur Herstellung von Hohlkörpern mit einem Schräghals umfasst eine Handhabungseinrichtung, die den Blasdorn zum zeitweiligen Einbringen in die Blasform in Richtung von dessen Längsachse einachsig hin- und her bewegt.

Nach dem Einbringen in die Kavität der Blasform werden die Vorformlinge mit einem Schrägschnitt mithilfe eines drehbaren Messers abgetrennt. Anschließend werden die gegenüber der Horizontalen schrägstehenden Blasdorne in die Blasform durch die einachsige Bewegung eingebracht.

Das bekannte Blaswerkzeug zur Herstellung von Hohlkörpern mit einem Schräghals weist den Nachteil auf, dass bei einem Artikelwechsel eine Anpassung des Neigungswinkels der Blasdorne an unterschiedlich geneigte Abschnitte von Blasformen zur Ausbildung des Schräghalses aufwändig ist. Ein weiterer, entscheidender Nachteil der einachsigen Bewegung der Blasdorne in Richtung von deren Längsachse ist der daraus resultierende große Bauraum des Blaswerkzeuges der Blasformmaschine.

Ausgehend von diesem Stand der Technik liegt der Erfindung die Aufgabe zugrunde, ein Blaswerkzeug für eine Blasformmaschine zur Herstellung von Hohlkörpern mit einem Schräghals zu schaffen, das lediglich einen geringen Bauraum erfordert und das Einbringen der Blasdorne in die Blasform erleichtert. In einer besonders bevorzugten Ausführungsform der Erfindung ermöglicht das Blaswerkzeug eine einfache Anpassung des Neigungswinkels der Blasdorne an unterschiedlich geneigte Abschnitte von Blasformen bei einem Artikelwechsel.

Die Lösung der Aufgabe beruht auf dem Gedanken, eine Handhabungseinrichtung vorzusehen, die eine zweiachsige Bewegung der Blasdorne innerhalb einer Ebene ermöglicht.

Im Einzelnen wird die Aufgabe bei einem Blaswerkzeug der eingangs erwähnten Art dadurch gelöst, dass das Blaswerkzeug mindestens eine Blasdornhalterung aufweist, wobei an jeder Blasdornhalterung mindestens ein Blasdorn angeordnet ist, jeder Blasdorn gegenüber der Horizontalen mit übereinstimmendem Neigungswinkel schräg angeordnet ist und die Handhabungseinrichtung ein Zweiachssystem umfasst, eingerichet um jede Blasdornhalterung in einer ersten Richtung und/oder einer zweiten, von der ersten Richtung verschiedenen Richtung innerhalb einer Ebene zu bewegen.

Durch die Zweiachsbewegung wird das Zustellen und Einbringen der Blasdorne in die geneigten Abschnitte der Blasform zur Ausbildung des Schräghalses auch unter ungünstigen Platzverhältnissen erleichtert. Die Aufteilung der Zustell- und Einbringbewegung in zwei unabhängige Bewegungskomponenten, insbesondere eine Vertikal- und eine Horizontalkomponente, reduziert zudem den Bauraum des Blaswerkzeugs und damit den von der Blasformmaschine benötigten Bauraum. Des Weiteren kann abhängig von der Geometrie des Schräghalses auf den bisher regelmäßig erforderlichen Schrägschnitt verzichtet werden.

Das Zweiachssystem zur Bewegung der Blasdornhalterungen wird vorzugsweise durch zwei einachsige Linearführungen mit einer ersten Antriebseinheit zur Bewegung jeder Blasdornhalterung in der ersten, vorzugsweise vertikalen und einer zweiten Antriebseinheit zur Bewegung jeder Blasdornhalterung in der zweiten, vorzugsweise horizontalen Richtung gebildet.

Eine Antriebssteuerung der ersten und zweiten Antriebseinheit ist derart eingerichtet, dass sich jeder Blasdorn während des Einbringens des Blasdorns in die Blasform ausschließlich in Richtung seiner Längsachse bewegt. Diese Bewegung wird vorzugsweise durch eine überlagerte Bewegung jeder Blasdornhalterung in horizontaler und vertikaler Richtung erzeugt. Abhängig vom Neigungswinkel der Blasdorne ist die Differenz zwischen der Geschwindigkeit der Bewegung in vertikaler und horizontaler Richtung für die Einbringbewegung zu bestimmen. Bis zum Beginn der Einbringbewegung kann der Blasdornblock bei Zustellbewegungen mit frei wählbaren Geschwindigkeiten in vertikaler und/oder horizontaler Richtung unter optimaler Nutzung der Platzverhältnisse in der Blasformmaschine bewegt werden.

In einer besonders vorteilhaften Ausgestaltung der Erfindung ist jede Blasdornhalterung lösbar an der Handhabungseinrichtung befestigt. Bei einem Artikelwechsel ist es lediglich erforderlich, jede Blasdornhalterung mit an die geänderte Blasform angepasstem Neigungswinkel der Blasdorne an der Handhabungseinrichtung zu befestigen. Die lösbare Befestigung kann beispielsweise mittels Schrauben oder mit werkzeuglos handhabbaren Befestigungsmitteln, wie beispielsweise Schnellspannsystemen, erfolgen.

In einer bevorzugten Ausführungsform der Erfindung weist das Blaswerkzeug nur eine Blasdornhalterung auf, die als Blasdornblock ausgebildet ist. Der Blasdornblock enthält Luftkanäle zur Zufuhr der Blasluft sowie Kühlkanäle zur Zufuhr von Kühlmittel zu den Blasdornen. Der Blasdornblock vermeidet eine aufwändige Verschlauchung jedes Blasdorns zur Versorgung mit Blasluft und Kühlmittel, die bei separaten Blasdornhalterungen für jeden Blasdorn üblich ist. Des Weiteren ist bei einem Artikelwechsel lediglich eine Blasdornhalterung zu wechseln.

In einer weiteren Ausgestaltung der Erfindung kann der Neigungswinkel jedes Blasdorns gegenüber der Horizontalen einstellbar sein. Die Einstellung erfolgt mittels eines Gelenks zwischen Blasdornhalterung und Blasdorn. Ohne Wechsel der Blasdornhalterung(en) ist eine einfache Anpassung des Neigungswinkels der Blasdorne an unterschiedlich geneigte Abschnitte von Blasformen bei einem Artikelwechsel möglich.

Nachfolgend wird die Erfindung anhand der Zeichnung näher erläutert. Es zeigen:

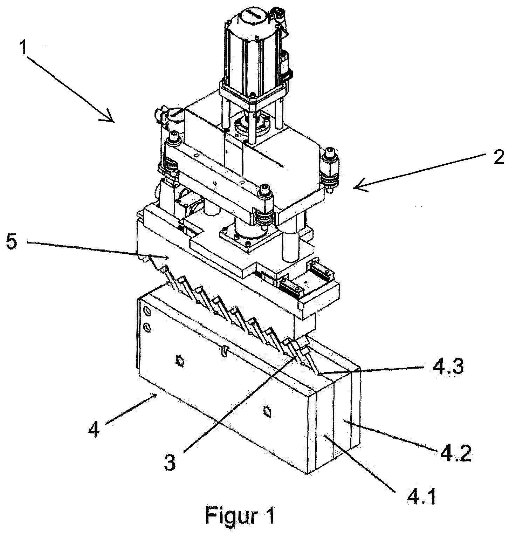

- **Figur 1**: eine perspektivische Darstellung eines erfindungsgemäßen Blaswerkzeugs,
- **Figur 2a**: eine Seitenansicht des Blaswerkzeugs nach Figur 1 vor dem Einbringen der Blasdorne,
- **Figur 2b**: das Blaswerkzeug nach Figur 2a während des Einbringens der Blasdorne, sowie
- **Figur 2c**: das Blaswerkzeug nach Figur 1 mit einer abweichenden Ausführungsform der Blasdornhalterung.

Das Blaswerkzeug 1 für eine Blasformmaschine zur Herstellung von nicht dargestellten Hohlkörpern mit einem Schräghals umfasst eine Handhabungseinrichtung (2) zum zeitweiligen Einbringen von insgesamt neun Blasdornen (3) in eine Blasform (4) .

Die Blasdorne (3) sind an einer Blasdornhalterung (5), die im dargestellten Ausführungsbeispiele als Blasdornblock ausgeführt ist, unter einem übereinstimmenden Neigungswinkel von 45° zur Horizontalen angeordnet und werden über eine nicht dargestellte Druckluftquelle zeitweilig mit Blasluft versorgt und über eine nicht dargestellte Wasserkühlung gekühlt. Der Blasdornblock enthält Luftkanäle zur Zufuhr der Blasluft sowie Kühlkanäle zur Zufuhr von Kühlmittel zu den Blasdornen. Der Blasdornblock vermeidet eine aufwändige Verschlauchung jedes Blasdorns zur Versorgung mit Blasluft und Kühlmittel.

Die Blasform (4) umfasst zwei Formhälften (4.1, 4.2), die die Kavitäten zur Ausbildung der Hohlkörper mit Schräghals begrenzen. Über an der Oberseite der Blasform (4) angeordnete Öffnungen (4.3) zwischen den geschlossenen Formhälften (4.1, 4.2) und sich anschließenden Abschnitten zur Ausbildung des Schräghalses werden die Blasdorne (3) in die zuvor aufgenommenen Vorformlinge in der Blasform (4) eingebracht.

Die Handhabungseinrichtung (2) zum Bewegen des Blasdornblocks in horizontaler Richtung (H) und vertikaler Richtung (V) ist als Zweiachssystem ausgeführt. Die erste einachsige Linearführung in vertikaler Richtung (V) wird von ersten und zweiten vertikalen Führungselementen (2.1), (2.2) gebildet. Das erste vertikale Führungselement (2.1) ist in dem Ausführungsbeispiel als Buchse, das zweite vertikale Führungselement (2.2) als Holm ausgeführt.

Die zweite einachsige Linearführung in horizontaler Richtung (H) wird von ersten horizontalen Führungselementen (2.5) und einen zweiten horizontalen Führungselement (2.6) gebildet. Die ersten horizontalen Führungselemente (2.5) sind in dem Ausführungsbeispiel als Führungsschuhe, das zweite horizontale Führungselement (2.6) als Führungsschiene ausgeführt.

Die erste einachsige Linearführung umfasst eine erste Antriebseinheit (2.3), die mittels einer Kugelumlaufspindel (2.8) eine an den vertikalen Führungselementen (2.2) endseitig befestigte Zwischenplatte (2.9) in vertikaler Richtung hin - und herbewegt. Die einachsige Linearführung kann als alternative Antriebselemente anstelle einer Kugelumlaufspindel beispielsweise auch ein Planetengewindetrieb oder einen Zahnstangentrieb aufweisen.

An der in vertikaler Richtung (V) beweglichen Zwischenplatte (2.9) sind die Führungsschuhe zur horizontalen Führung der Führungsschiene befestigt. Die Führungsschuhe führen längsverschieblich in horizontaler Richtung (H) die Führungsschiene, die mit einer Traverse (2.7) fest verbunden ist. Auf der Traverse (2.7) ist eine zweite Antriebseinheit (2.4) angeordnet, die die Traverse (2.7) in horizontaler Richtung (H) gegenüber der Zwischenplatte (2.9) bewegt.

An der Unterseite der Traverse (2.7) ist lösbar der Blasdornblock befestigt.

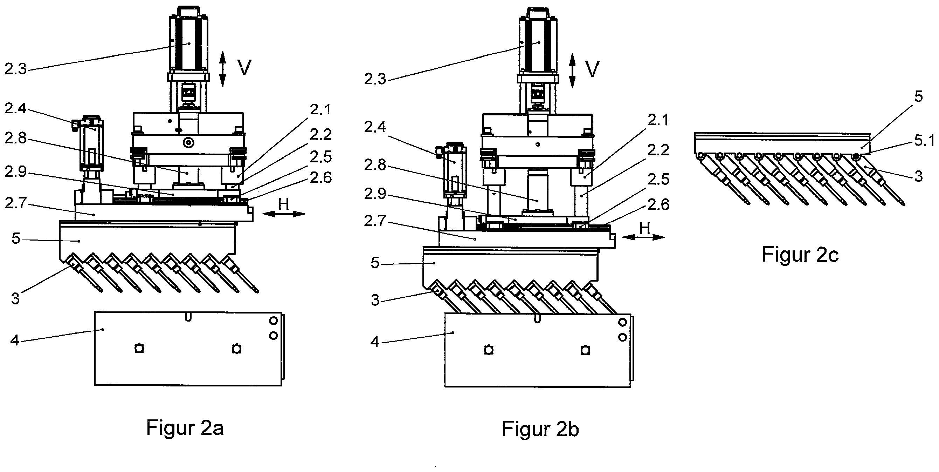

Um den Blasvorgang mit dem erfindungsgemäßen Blaswerkzeug (1) einzuleiten, können die Blasdorne (3)aus der in Figur 2a dargestellten Position mit einer Zustellbewegung in vertikaler Richtung (V) abgesenkt werden, bis sich die Spitzen der Blasdorne (3) oberhalb der Öffnungen (4.3) befinden. Sodann bewegen die erste und zweite Antriebseinheit (2.3, 2.4) den Blasdornblock mit übereinstimmender vertikaler und horizontaler Geschwindigkeit, sodass sich jeder Blasdorn (3) während der Einbringbewegung ausschließlich in Richtung seiner Längsachse (L) bewegt.

Bei einem Neigungswinkel der Längsachse (L) zur Horizontalen, der von 45° unterschiedlich ist, passt eine in den Figuren nicht dargestellte Antriebssteuerung der ersten und zweiten Antriebseinheit (2.3, 2.4) die Geschwindigkeit der Bewegung des Blasdornblocks in vertikaler und horizontaler Richtung entsprechend an, sodass sich jeder Blasdorn (3) während der Einbringbewegung ausschließlich in Richtung seiner Längsachse (L) bewegt.

Figur 2 c zeigt eine abweichende Ausführungsform der als Blasdornblock ausgeführten Blasdornhalterung (5). Der Neigungswinkel jedes Blasdorns (3) gegenüber der Horizontalen ist einstellbar. Die Einstellung erfolgt mittels eines Gelenks (5.1) zwischen der Blasdornhalterung (5) und jedem Blasdorn (3).

**Bezugszeichenliste**

| **Nr.** | **Bezeichnung** |
|---|---|
| 1 | Blaswerkzeug |
| 2 | Handhabungseinrichtung |
| 2.1 | Erstes vertikales Führungselement |
| 2.2 | Zweites vertikales Führungselement |
| 2.3 | Erste Antriebseinheit |
| 2.4 | Zweite Antriebseinheit |
| 2.5 | Erstes horizontales Führungselement |
| 2.6 | Zweites horizontales Führungselement |
| 2.7 | Traverse |
| 2.8 | Kugelumlaufspindel |
| 2.9 | Zwischenplatte |
| 3 | Blasdorne |
| 4 | Blasform |
| 4.1 | Formhälfte |
| 4.2 | Formhälfte |
| 4.3 | Öffnungen |
| 5 | Blasdornhalterung |
| 5.1 | Gelenk |

## Patentansprüche

1. Blaswerkzeug (1) für eine Blasformmaschine zur Herstellung von Hohlkörpern mit einem Schräghals umfassend eine Handhabungseinrichtung (2) zum zeitweiligen Einbringen mindestens eines Blasdorns (3) in eine Blasform (4) sowie zum Kalibrieren des Schräghalses, **dadurch gekennzeichnet, dass**
- das Blaswerkzeug (1) mindestens eine Blasdornhalterung (5) aufweist, wobei an jeder Blasdornhalterung mindestens ein Blasdorn (3) angeordnet ist,
- jeder Blasdorn (3) gegenüber der Horizontalen mit übereinstimmendem Neigungswinkel schräg angeordnet ist und
- die Handhabungseinrichtung (2) ein Zweiachssystem umfasst, eingerichet um jede Blasdornhalterung (5) in einer ersten Richtung und/oder einer zweiten, von der ersten Richtung verschiedenen Richtung innerhalb einer Ebene zu bewegen.

2. Blaswerkzeug nach Anspruch 1, **dadurch gekennzeichnet, dass** die erste Richtung die vertikale Richtung (V) und die zweite Richtung die horizontale Richtung (H) ist.

3. Blaswerkzeug nach Anspruch 1 oder 2, **dadurch gekennzeichnet, dass** das Zweiachssystem zwei einachsige Linearführungen sowie einen erste Antriebseinheit (2.3) zur Bewegung jeder Blasdornhalterung (5) in der ersten Richtung und einen zweite Antriebseinheit (2.4) zur Bewegung jeder Blasdornhalterung (5) in der zweiten Richtung aufweist.

4. Blaswerkzeug nach Anspruch 3, **dadurch gekennzeichnet, dass** eine Antriebssteuerung der ersten und zweiten Antriebseinheit (2.3, 2.4) derart eingerichet ist, dass sich jeder Blasdorn (3) beim Einbringen des Blasdorns (3) in die Blasform (4) ausschließlich in Richtung seiner Längsachse (L) bewegt.

5. Blaswerkzeug nach einem der Ansprüche 1 bis 4, **dadurch gekennzeichnet, dass** jede Blasdornhalterung (5) lösbar an der Handhabungseinrichtung (2) angeordnet ist.

6. Blaswerkzeug nach einem der Ansprüche 1 bis 5, **dadurch gekennzeichnet, dass** das Blaswerkzeug (1) nur eine Blasdornhalterung (5) aufweist, die als Blasdornblock ausgebildet ist.

7. Blaswerkzeug nach einem der Ansprüche 1 bis 6, **dadurch gekennzeichnet, dass** der Neigungswinkel jedes Blasdorns (3) gegenüber der Horizontalen einstellbar ist.

## Claims

1. Blowing tool (1) for a blow molding machine for producing hollow members with an angled neck, comprising a handling device (2) for temporarily introducing at least one blowing mandrel (3) into a blow mold (4) and for calibrating the angled neck, **characterized in that**
- the blowing tool (1) has at least one blowing mandrel retention member (5), wherein at least one blowing mandrel (3) is arranged on each blowing mandrel retention member,
- each blowing mandrel (3) is arranged in an inclined manner with respect to the horizontal at a corresponding angle of inclination and
- the handling device (2) comprises a biaxial system which is configured to move each blowing mandrel retention member (5) in a first direction and/or a second direction which is different from the first direction within a plane.

2. Blowing tool according to Claim 1, **characterized in that** the first direction is the vertical direction (V) and the second direction is the horizontal direction (H) .

3. Blowing tool according to Claim 1 or Claim 2, **characterized in that** the biaxial system has two uniaxial linear guides and a first drive unit (2.3) for moving each blowing mandrel retention member (5) in the first direction and a second drive unit (2.4) for moving each blowing mandrel retention member (5) in the second direction.

4. Blowing tool according to Claim 3, **characterized in that** a drive control of the first and second drive unit (2.3, 2.4) is configured in such a manner that each blowing mandrel (3) when the blowing mandrel (3) is introduced into the blow mold (4) is moved exclusively in the direction of the longitudinal axis (L) thereof.

5. Blowing tool according to any one of Claims 1 to 4, **characterized in that** each blowing mandrel retention member (5) is releasably arranged on the handling device (2).

6. Blowing tool according to any one of Claims 1 to 5, **characterized in that** the blowing tool (1) has only one blowing mandrel retention member (5) which is constructed as a blowing mandrel block.

7. Blowing tool according to any one of Claims 1 to 6, **characterized in that** the angle of inclination of each blowing mandrel (3) can be adjusted with respect to the horizontal.

## Revendications

1. Outil de soufflage (1) pour une machine de moulage par soufflage destinée à la fabrication de corps creux pourvus d'un col oblique, comprenant un dispositif de manipulation (2) destiné à introduire temporairement au moins un mandrin de soufflage (3) dans un moule de soufflage (4) ainsi qu'à étalonner le col oblique, **caractérisé en ce que**
- l'outil de soufflage (1) possède au moins un porte-mandrin de soufflage (5), au moins un mandrin de soufflage (3) étant disposé sur chaque porte-mandrin de soufflage,
- chaque mandrin de soufflage (3) est disposé en biais par rapport à l'horizontale avec des angles d'inclinaison concordants et
- le dispositif de manipulation (2) comporte un système à deux axes, conçu pour déplacer chaque porte-mandrin de soufflage (5) dans une première direction et/ou dans une deuxième direction, différente de la première direction, à l'intérieur d'un plan.

2. Outil de soufflage selon la revendication 1, **caractérisé en ce que** la première direction est la direction verticale (V) et la deuxième direction la direction horizontale (H).

3. Outil de soufflage selon la revendication 1 ou 2, **caractérisé en ce que** le système à deux axes possède deux guidages linéaires à un axe ainsi qu'une première unité d'entraînement (2.3) destinée à déplacer chaque porte-mandrin de soufflage (5) dans la première direction et une deuxième unité d'entraînement (2.4) destinée à déplacer chaque porte-mandrin de soufflage (5) dans la deuxième direction.

4. Outil de soufflage selon la revendication 3, **caractérisé en ce qu'**une commande d'entraînement de la première et de la deuxième unité d'entraînement (2.3, 2.4) est conçue de telle sorte que lors de l'introduction du mandrin de soufflage (3) dans le moule de soufflage (4), chaque mandrin de soufflage (3) se déplace uniquement dans la direction de son axe longitudinal (L).

5. Outil de soufflage selon l'une des revendications 1 à 4, **caractérisé en ce que** chaque porte-mandrin de soufflage (5) est monté de manière amovible sur le dispositif de manipulation (2).

6. Outil de soufflage selon l'une des revendications 1 à 5, **caractérisé en ce que** l'outil de soufflage (1) ne possède qu'un seul porte-mandrin de soufflage (5), lequel est réalisé sous la forme d'un bloc de mandrin de soufflage.

7. Outil de soufflage selon l'une des revendications 1 à 6, **caractérisé en ce que** l'angle d'inclinaison de chaque mandrin de soufflage (3) est réglable par rapport à l'horizontale.
